# EUROPEAN PATENT APPLICATION

(11) **EP 4 831 098 A1**
(43) Date of publication of application: **28.10.2026**
(21) Application number: 25172566.9
(22) Date of filing: 25.04.2025
(51) Int. Cl.: B65G 57/03, B65G 57/04, B65G 57/11, B65G 57/16

(54) **CAN END STACKER AND A METHOD FOR STACKING CAN ENDS**

(71) Applicant: Canline Systems BV, 5521 DW Eersel (NL)
(72) Inventor: Coolen, Ruud, 5541 VC Reusel (NL); Veron, Mark, 5521 LC Eersel (NL)
(74) Representative: AWA Sweden AB

(57) **Abstract**

The disclosure relates to a can end stacker (100) comprising:
a conveyor (110) extending along a first direction (R1), an underpressure hopper (120) positioned downstream the conveyor (110) and configured to draw can ends (10) downwardly one after the other to form a downwardly extending stack of can ends (11), the stack of can ends (11) defining a geometrical upwardly extending stack direction (R2), a sensor (130), and a stack height controller (140) configured to, based on the level (L) of the upper most can end (10') determined by the sensor (130), control the level (L) of the upper most can end (10'), wherein the stack direction (R2) forms an angle (α1) with the first direction (R1), the angle (α1) being between 45-85°, and wherein the upper most can end (10') is positioned such that it intersects a path (P1) of a can end (10") leaving the conveyor (110) such that the can end (10") leaving the conveyor (110) hits an upper major surface (S1) of the upper most can end (10').

## Description

### Field of the disclosure

The invention relates to a can end stacker.

The invention also relates to a method for stacking can ends.

### Technical Background

In the production of can ends, the process typically begins with large sheets of metal being fed into a press, which rapidly cuts out multiple circular blanks. These blanks are then passed through a shell press, where they are formed into the appropriate can end shape.

Once shaped, the can ends are conveyed further through the production process, often transported one after the other in a row, for additional treatments, such as application of a sealant compound along the periphery of the respective can end. In certain stages of the system, the can ends transition from being transported one after the other in a row to stacked storage or conveying.

When transported in a row one after the other, can ends may e.g., be moved by a conveyor on belts or the like. As the can ends exit the conveyor, they often enter an accumulator or stacking unit, such as a hopper. The stacking unit rearranges the can ends from a row where they are positioned one after the other to a stack where they are positioned one on top of the other. The stacking process is typically achieved through drop mechanisms which allows the ends to fall into a controlled stack. To speed up the process, rotary feeders assisting in precise stacking, or magnetic or vacuum systems which guides the can ends into position may be provided.

The conveyor speed is usually limited by how fast the accumulator or stacking unit can receive and stack the can ends. While high conveyor speed is generally desirable, exceeding a certain threshold can introduce issues at the transition point. If the speed is too high, there is a risk that can ends bounces back onto the conveyor and thereby risk causing transportation disruptions. If the speed is too high, there is also a risk that can ends collides with machine parts or other can ends at such speeds that e.g., newly applied and still semi-liquid sealant compound splashes. Sealant compound splashing from one can end onto machine parts and/or to other can ends may result in a need to stop the machine for cleaning and/or to remove faulty can ends.

Most commercial can end transportation systems handle stacking efficiently at an incoming speed of up to 4.5 m/sec, enabling a throughput of approximately 2,700 can ends per minute. However, there is a growing need to improve the manufacturing process such that it permits increasing the speed of the conveyor without encountering the above problems at the transition point between being transported in a row and stacking.

### Summary of the disclosure

It is an object of the invention to provide a solution that enables highspeed transitions from transporting the can ends in a row to a stack while minimizing the risk of misalignment or, bouncing of the can ends, or splashes of sealant compounds, thereby improving efficiency and quantity in can end manufacturing.

This object has been achieved by a can end stacker comprising:
a conveyor extending along a first direction and being configured to transport can ends along the first direction, the can ends being arranged in a row one after the other along the first direction,
an under-pressure hopper positioned downstream the conveyor as seen along the first direction and configured to draw can ends downwardly one after the other to form a downwardly extending stack of can ends, the stack of can ends defining a geometrical upwardly extending stack direction,
a sensor configured to determine a level of an upper most can end in the stack of can ends as seen along the stack direction,
a stack height controller configured to, based on the level of the upper most can end determined by the sensor, controllably allow can ends at a bottom of the stack of can ends to leave the stack of can ends and to thereby control the level of the upper most can end,
wherein the stack direction forms an angle with the first direction, the angle being between 45-85°, and
wherein the stack height controller is configured to control the level of the upper most can end such that the upper most can end is positioned at a level where the upper most can end, due to the level and the angle of the stack direction, intersects a path of a can end leaving the conveyor such that the can end leaving the conveyor hits an upper major surface of the upper most can end.

As will be elaborated hereinafter, the present invention provides for a solution having the advantage of that the speed of the conveyor may be increased to greater speeds than before without increasing the risk of misalignment, bouncing, or sealant compound splashes. This is enabled by the angled stack direction and due to the level of the upper most can end controlled by the stack height controller. When the can end leaving the conveyor hits the upper major surface of the upper most can end in the stack of can ends with the upper major surface being inclined, the can end leaving the conveyor will lose a significant fraction of its speed rather than being forced to instantly stop its movement. Moreover, the stack of can ends typically provides some flexibility allowing the upper most can end to move slightly further downwardly when being hit by the can end leaving the conveyor, which also dissipates some of the kinetic energy of the can end leaving the conveyor.

The conveyor may be any type of conveyor commercially known and suitable for transportation can ends. The conveyor may be a belt conveyor, a chain conveyor, a magnetic conveyor, a vacuum conveyor, or an air conveyor.

The can ends may be transported by the conveyor in a row of mutually separated can ends. A row is herein intended to refer to a plurality of can ends being arranged with a respective major surface along a common plane and with the can ends being arranged one after the other along the common plane. A stack is herein intended to refer to a plurality of can ends being arranged with a respective major surface parallel to a common plane and with the can ends being arranged one on top of the other along a normal to the common plane. In the preferred embodiment, the can ends in the row are arranged in the same orientation in the sense that their respective first major surface faces in the same direction. The can ends are typically circular and depending on the machine, they are leaving their rotational orientation, the rotation around their respective normal direction, may be anything from the same rotational orientation to an arbitrary rotational orientation.

The conveyor and under-pressure hopper can be positioned at any location along the can end production line where transition from a transportation in a row to a stack is required. Such transition may be necessary at multiple locations throughout the production process.

A transportation in a row is typically required when can ends enter and leave processing machines such as a shell presses, liner application machines, or other treatment equipment.

Conversely, a stacked arrangement is often preferred when can ends are placed in buffer zones along the production line or being prepared for packaging and transport.

The can ends may be can ends used for sealing a top and/or a bottom of a can. The can ends may be circular disks, or have any other suitable shape.

The under-pressure hopper is positioned downstream the conveyor as seen along the first direction. This provides that a can end leaving the conveyor, at a downstream end of the conveyor, is transferred to and received by the under-pressure hopper. The under-pressure hopper is configured to draw can ends downwardly one after the other by being provided with an under-pressure which influence the path of the can ends leaving the conveyor such that there is formed a downwardly extending stack of can ends in the under-pressure hopper.

The under-pressure hopper may comprise an opening having a mouth that intersects a path of a can end leaving the conveyor such that the can end leaving the conveyor is received by the mouth and drawn downwardly into the opening and forms part of the stack of can ends.

The opening may be a thoroughgoing opening such that the can ends received by the under-pressure hopper are permitted to pass through the under-pressure hopper.

The opening of the under-pressure hopper may be tubularly formed. The opening may form a tube extending through the under-pressure hopper.

The under-pressure hopper may comprise an inside surface, e.g., an inside surface of the tube, having at least one surface opening where the under-pressure may be provided through.

The can ends are stacked on top of each other in the stack of can ends and have their respective first major surface facing a respective second major surface of another can end.

The can end leaving the conveyor will become the uppermost can end upon joining the stack, until the next can end leaves the conveyor and takes its place as the new uppermost can end.

The stack of can ends defines a geometrical upwardly extending stack direction. The stack direction forms and angle with the first direction, the angle being between 45-85°, preferably between 45-80°, more preferably between 50-70°.

It may be noted that the angle is chosen such that the upper most can end sufficiently intersects a path of a can end leaving the conveyor such that the can end leaving the conveyor hits the upper major surface of the upper most can end at an angle such that the can end leaving the conveyor is slowed down.

It has been realised that the above specified range of angles have advantages in relation to angles outside this range. An angle less than 45° increases the impact force on the upper most can end when the can end leaving the conveyor hits the upper major surface of the upper most can end and may lead to a too abrupt stop. An angle above 85° reduces the projected area of the upper most can end where the can end leaving the conveyor may be able to hit. A smaller projected impact area may result in that can ends does not hit the upper major surface of the upper most can end and instead travel past the upper most can end and directly hit e.g., a rear wall of the under-pressure hopper.

The angle may also be defined as the angle formed between a plane of the conveyor extending in the first direction and the stack direction.

It is to be understood that the stack physically extends downwardly, but the stack direction as used herein geometrically extends upwardly.

The sensor may be arranged in the under-pressure hopper. The sensor may be arranged at a top of the stack of can ends. The sensor may be configured to determine a level of an upper most can end in the stack of can ends by determining the level of the upper most can end relative to a reference point of the sensor. The reference point may be a central axis of the field of view of the sensor, such that the optimal level of the upper most can end, i.e., an optimal stack height, is in the middle of the field of view of the sensor.

The sensor may be set to have an allowable range in where the level of the upper most can end is to be present. The allowable range may be 1-6, preferably 2-5, more preferably 2-3, can ends below and above the central axis of the sensor. It may be noted that for a comparably small angle it is possible to have a comparably wide allowable range of the level.

The sensor may inform the stack height controller of the level of the upper most can end by sending a signal. The stack height controller may, based on this signal, allow can ends at the bottom of the stack of can ends to leave the stack of can ends or stop can ends at the bottom of the stack of can ends from leaving the stack of can ends such that the level of the upper most can end is kept within the allowable range, and preferably at the same level as the central axis of the sensor.

The sensor may be an ultrasonic sensor, a radar sensor, an optical sensor, or a camera.

It is to be understood that there are many levels along the stack direction and some of them are levels within the allowable range.

The level of the upper most can end which is determined by the sensor may be referred to as a first level. The level of the upper most can end which is controlled by the stack height controller, based on the level of the upper most can end determined by the sensor, may be referred to as a second level. The first and second level may be the same if the determined level of the upper most can end is within the allowable range.

Preferably, the stack height controller is configured to controllably allow can ends at a bottom of the stack of can ends to leave the stack of can ends one by one. However, the stack height controller may be configured to controllably allow one or more can ends to leave the stack of can ends at a bottom of the stack of can ends.

It is to be understood that if the sensor detects or determines that the level of the upper most can end is above the central axis of the sensor, the stack height controller may allow one or more can ends to leave the stack of can ends at a bottom of the stack of can ends such that the level of the upper most can end is brought to coincide with the level of the central axis or to be within the allowable range of the sensor. Consequently, if the sensor detects or determines that the level of the upper most can end is below the central axis of the sensor, the stack height controller may stop the can ends of the stack of can ends to leave the stack of can ends until the level of the upper most can end coincides with the level of the central axis or is within the allowable range of the sensor.

It is to be understood that if the level of the upper most can end is outside the allowable range the risk of having can ends bouncing back onto the conveyor, causing disruptions, or colliding with machine parts or other ends, leading to sealant splashes and potential defects is increased. To reduce such risk, the conveyor may be halted, or the speed of the conveyor may be reduced, if the sensor determines that the level of the upper most can end is outside the allowable range, or close to a threshold of the allowable range. Such set-up of the can end stacker may allow for adjustment of the level of the upper most can end before any disruptions occur.

By designing a can end stacker in accordance with the present invention the production speed can be increased significantly. Before the introduction of the inventive concept otherwise similarly designed can end stackers were able to handle a maximum incoming speed of the can ends at 4.5 m/s, and thereby enables a stacking of approximately 2700 can ends per minute. A can end leaving the conveyor at a high speed, i.e., usually a speed above 4.5 m/sec, have a high risk of traveling past the conventional under-pressure hopper and instead collide with machine parts and in worst case bounce back onto the conveyor and collide with other can ends. Such an incident may, as mentioned, cause disruptions to the production. However, due to the design of the present invention, the incoming speed of the can may be set to above 5 m/s, and in accordance with preferred embodiments to above 5.5 m/s, and thereby enabling a stacking of approximately 3600 can ends per minute. This significant increase is achieved due to that the stack of can ends is arranged such that the can end leaving the conveyor hits an upper major surface of the upper most can end which is oriented inclined in relation to the path of the can end leaving the conveyor. It has been realised that it is advantageous to have the can end leaving the conveyor to hit an upper major surface of the upper most can end as the stack of can ends damps the impact of the incoming can end leaving the conveyor and thereby efficiently reduces the speed of the can end so that the under-pressure hopper is able to draw the can end downwardly and form part of the stack of can ends.

The damping effect is achieved by the stack of can ends, as it is at least to some extent capable of being compressed due to the inherent design of each can end. The stack of can ends can be compressed by at least 1-5% of its total length.

Surprisingly, no damage is caused to the can ends by having the set-up of the present invention and deliberately arranging an impact between the upper most can end and the can end leaving the conveyor. This is considered to be accomplished by the fact that the upper most can end is inclined in relation to the path of the can end leaving the conveyor.

An advantage of the increased speed at which the can end stacker operates is that it can compensate for inefficiencies in other machines along the production line. In the can end production process, the ends pass through various machines for forming and treatment. Some machines may operate at lower speeds while others are faster, creating potential bottlenecks. This difference can prevent downstream machines with higher capacities from operating at full efficiency. To maintain high output across the entire production line, it's essential to address any time lost during different production stages. One potential area for improvement is the transfer of can ends between machines. The present invention offers a solution by providing an improved can end stacker which may be incorporated between different machine types in the production line. The can end stacker of the present invention is optimized to handle a higher volume of can ends, thereby compensating for production line slack and facilitating increased end product output.

It is to be understood that the stack of can ends refers to the can ends present between the stack heigh controller and the upper most can end. However, it is also to be understood that there may exist a stack of can ends downstream of the stack of can ends to which is referred to herein.

The geometrical upwardly extending stack direction may be the stack direction of a first portion of the stack. The first portion of the stack may be formed of at least 10 can ends as seen from the upper most can end. A second and any further portion of the stack may form further stack directions.

The stack height controller may be configured to control the level of the upper most can end such that a central portion of the upper major surface of the upper most can end in the stack of can ends is arranged to be at the same height as a bottom edge of the can end leaving the conveyor.

This relation provides that the bottom edge of the can end leaving the conveyor hits the central portion of the upper major surface. If the central portion of the upper most can end is arranged at the same height as the bottom edge, a sufficient impact zone is provided which ensures the damping effect of the stack of can ends.

The height at which the bottom edge may be arranged is preferably measured from a conveying plane or surface of the conveyor, preferably from an upwardly facing conveying plane or surface of the conveyor.

That the central portion of the upper most can end is arranged at the same height as the bottom edge intends to refer to that they align with each other as seen in the first direction.

In such set-up, the allowable range of the sensor is set such that the level of the central portion of the upper major surface of the upper most can end in the stack of can ends is arranged at the same height as a bottom edge of the can end leaving the conveyor.

The central portion may have an extension projected along the first direction from a midpoint of the upper major surface of the upper most can end to such an extent that it corresponds to 75%, preferably 50%, of a total length of the upper major surface of the upper most can end in the stack of can ends as projected along the first direction. It may in this context be noted that the extension from the midpoint is symmetrical such that a respective edge portion outside the central portion is of equal size both before and after the central portion as seen projected along the first direction.

The optimal stack height, i.e., the optimal level of the upper most can end, may be determined by having the midpoint arranged at the same height as the bottom edge of the can end leaving the conveyor. An allowable range of the level of the upper most can end may be defined based on how many can ends which can be arranged below or above the optimal level while still ensuring that the can end leaving the conveyor hits a central portion of the upper most can end.

The stack height controller may be positioned at a distance down along the downwardly extending stack. Preferably there is at least 10, more preferably at least 15, can ends between the can end with which the stack height controller interacts and the upper most cand end. In the preferred embodiment, there is significantly more can ends in the stack, such as about 100.

The under-pressure hopper may comprise a rear wall positioned on a side of the under-pressure hopper being opposite the conveyor, wherein the rear wall is configured to prevent the can end leaving the conveyor to travel past the under-pressure hopper.

It is to be understood that in some cases, a can end leaving the conveyor and which has collided with the upper most can end may also collide with the rear wall of the under-pressure hopper. However, as the impact between the can end leaving the conveyor and the upper most can end decreases the speed of the can end, it is possible to increase the speed of the conveyor without the collision with the rear wall causing the can end to bounce back onto the conveyor or causing compound splash. The rear wall simply works as a stopper.

The under-pressure hopper may be located at a first distance D1 from a downstream end of the conveyor. The first distance D1 is measured as the shortest distance along the first direction from the downstream end of the conveyor to a centre axis of the under-pressure hopper, where centre refers to a centre of the can ends in the stack of can ends in the under-pressure hopper. Thus, the distance D1 is related to the diameter of the can ends and is in the order of at least 30 mm, preferably between 30 mm and 100 mm, more preferably between 30 mm and 80 mm.

The can end stacker may further comprises a transfer guide surface, which extends along the first direction, and which bridges a second distance between the conveyor and the under-pressure hopper.

The second distance is measured as the shortest distance along the first direction from the downstream end of the conveyor to a downstream end of the transfer guide surface. The downstream end of the transfer guide surface may be a transition point between the transfer guide surface and the inside surface of the under-pressure hopper. Thus, the second distance D2 is a measure of the distance being independent of the diameter of the can ends. The second distance is between 20 mm and 80 mm, preferably between 20 mm and 50 mm.

The first and second distance may be parallel with each other.

The rear wall is located at a distance from a downstream end of the conveyor. The rear wall is preferably located such that there is a gap of between 0.5 mm and 2 mm, preferably between 0.5 mm and 1 mm, between a closest edge of the upper most can end and the rear wall, i.e., between the edge of the upper most can end facing away from the conveyor.

The transfer guide surface may be configured to guide the can end leaving the conveyor towards the upper most can end along the first direction.

The transfer guide surface preferably is arranged on the same height as the conveyor such that there is a smooth transition between the conveyor and the transfer guide surface.

The transfer guide surface may be a stationary guide.

The transfer guide surface may be advantageous as it may decrease the speed of the can end leaving the conveyor prior to that the can end hits the upper most can end.

The transfer guide surface may decrease the speed of the can end leaving the conveyor due to friction between the can end and the transfer guide surface.

The conveyor and the transfer guide surface may be arranged such that there exists a gap between them. The gap may be less than 5 mm, preferably less than 2 mm.

The transfer guide surface has preferably a length along the first direction between 10 mm and 80 mm, preferably between 20 mm and 50 mm. A potential disadvantage of having the transfer guide surface bridge a distance greater than 80 mm is the lack of control over the speed of the can ends. The longer the transfer guide surface, the more likely it is that the can ends will decelerate too much. This can increase the risk of collisions between incoming can ends leaving the conveyor and the one present on the transfer guide surface.

The transfer guide surface may include a planar surface portion receiving the can end leaving the conveyor, and preferably also includes a downwardly curved surface where the transfer guide surface transitions into forming part of an inside surface of the under-pressure hopper.

The planar surface portion may have the advantage of decreasing the speed of the can end before it hits the upper most can end in the stack of can ends.

The downwardly curved surface may have the advantage of providing a smooth transition between the planar surface portion and the inside surface of the under-pressure hopper.

The can end stacker may further comprise an under-pressure source configured to provide under-pressure to the under-pressure hopper so as to draw can ends downwardly one after the other to form the downwardly extending stack of can ends.

The under-pressure source may be a vacuum pump.

The under-pressure source may be manually or automatically adjusted to supply a sufficient level of under-pressure.

During the running of the can end stacker, pollution to the under-pressure hopper, and other parts which the under-pressure source supplies under-pressure to, may occur which decreases the under-pressure level acting on the can ends which may decrease the reliability of the can end stacker and cause production disruptions.

The can end stacker may further comprise a throttle valve arranged between the under-pressure source and the under-pressure hopper, wherein the throttle valve is configured to controllably adjust the under-pressure in the under-pressure hopper.

An under-pressure source may be connected to several units, e.g., several under-pressure hoppers arranged along the same, or parallel production lines. It is therefore advantageous to have a throttle valve being arranged between the under-pressure source and the under-pressure hopper such that the under-pressure level may be adjusted for the respective under-pressure hopper.

The throttle valve may be manually or automatically adjusted to permit a sufficient level of under-pressure to be provided to the under-pressure hopper.

The can end stacker may further comprise an under-pressure sensor configured to determine the under-pressure in the under-pressure hopper.

The can end stacker may further comprises an under-pressure controller configured to, in response to the determined under-pressure by the under-pressure sensor, automatically control a state of the throttle valve so as adjust the provided under-pressure in the under-pressure hopper.

The throttle valve can be in a fully open state, a closed state, or in one of several intermediate states. When fully open, the full capacity of the under-pressure source is supplied to the under-pressure hopper. When fully closed, no under-pressure is provided to the hopper. In an intermediate state, a portion of the capacity of the under-pressure source is supplied to the under-pressure hopper, depending on the degree to which the throttle valve is open.

The under-pressure controller may be an analogue or digital motor.

The stack height controller may be configured to allow a can end at a bottom of the stack of can ends to leave the stack of can ends and thereby control the level of the upper most can end such that the upper most can end is travelling downwardly at a moment in time when the can end leaving the conveyor hits the upper most can end.

Alternatively, the stack height controller may control the level of the upper most can end such that the upper most can end is standing still at a moment in time when the can end leaving the conveyor hits the upper most can end.

The above object has also been achieved by a method for stacking can ends, the method comprising:
conveying can ends along a first direction, the can ends being arranged in a row along the first direction,
drawing can ends downwardly one after the other into an under-pressure hopper by providing under-pressure and stacking the can ends to form a downwardly extending stack of can ends, the stack of can ends defining a geometrical upwardly extending stack direction,
determining a level of an upper most can end in the stack of can ends as seen along the stack direction,
controlling the level of the upper most can end, based on the determined level of the upper most can end, such that the upper most can end is positioned at a level where the upper most can end, due to the level and an angle of the stack direction, intersects a path of a can end being conveyed in the first direction such that a can end hits an upper major surface of the upper most can end and thereafter becomes the upper most can end in the stack of can ends, and
allowing, based on the determined level of the upper most can end, can ends to leave the stack of can ends from a bottom of the stack of can ends to thereby control the level of the upper most can end.

The method may further comprise determining the under-pressure acting on the can ends,
adjusting the under-pressure automatically in response to the determined under-pressure, preferably towards a predetermined under-pressure target value.

The advantages of the various features that have been discussed above with reference to the can end stacker are equally applicable with reference to the method. Also, the various variants discussed with reference to the can end stacker are equally applicable to the method.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

The invention may also in short be said to relate to a can end stacker comprising:
a conveyor extending along a first direction, an under-pressure hopper positioned downstream the conveyor and configured to draw can ends downwardly one after the other to form a downwardly extending stack of can ends, the stack of can ends defining a geometrical upwardly extending stack direction, a sensor, and a stack height controller configured to, based on the level of the upper most can end determined by the sensor, control the level of the upper most can end, wherein the stack direction forms an angle with the first direction, the angle being between 45-85°, and wherein the upper most can end is positioned such that it intersects a path of a can end leaving the conveyor such that the can end leaving the conveyor hits an upper major surface of the upper most can end.

### Brief description of the drawings

The invention will by way of example be described in more detail with reference to the appended schematic drawings, which shows a presently preferred embodiment of the invention.
Figure 1 discloses a portion of a can end production line comprising a can end stacker.
Figure 2 discloses a schematic perspective view of the can end stacker.
Figure 3 discloses a top view of an under-pressure hopper of the can end stacker.
Figures 4A-4D disclose a cross-sectional view of the can end stacker.

### Detailed description of embodiments

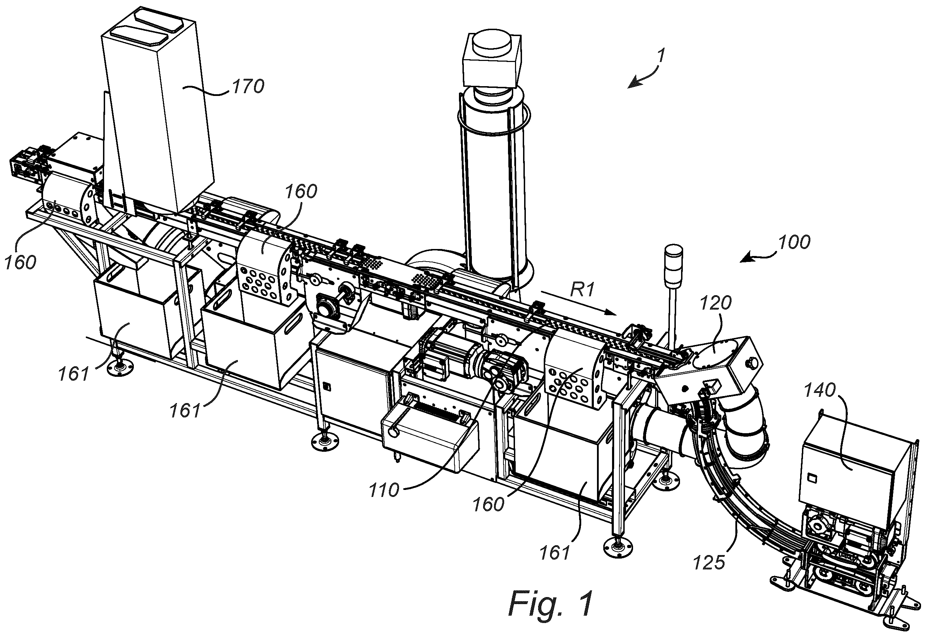

With reference to Fig. 1, a portion of a can end production line 1 is shown. The can end production line 1 comprises a can end stacker 100 comprising a conveyor 110 extending along a first direction R1 and an under-pressure hopper 120 positioned downstream the conveyor 110. Along the conveyor 110 different processing machines may be located. As shown in Fig. 1 a control station 170 is arranged above the conveyor 110. The control station 170 may be a camera 170 configured to observe can ends 10 transported on the conveyor 110 and detect faulty can ends 10. Detected faulty can ends may later be removed from the conveyor 110. A faulty can end may for example be a can end that has structural damages such as dents, or a can end which is positioned upside-down. Faulty can ends may be removed from the conveyor 110 by being pushed of the conveyor and received by a can end collector 160 further guiding the faulty can end into a collection bin 161. There may be several control stations 170 and can end collectors 161 located along a production line 1. Faulty can ends which are collected in the collection bins 161 may be recycled.

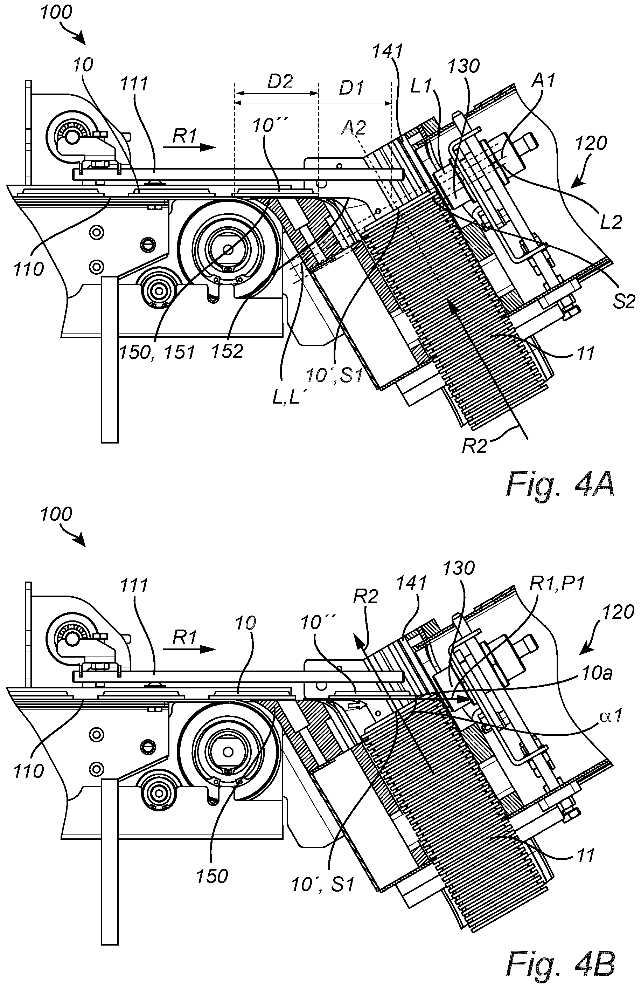

At a downstream end of the conveyor 110 the under-pressure hopper 120 is positioned. This provides that a can end 10" leaving the conveyor 110, as will be described in more detail in relation to Figs. 4A-D, is transferred to and received by the under-pressure hopper 120. The under-pressure hopper 120 is configured to draw can ends 10" leaving the conveyor downwardly one after the other by being provided with an under-pressure which influence the path of the can ends 10" leaving the conveyor 110 such that there is formed a downwardly extending stack of can ends 11 in the under-pressure hopper 120. The under-pressure is provided by an under-pressure source, not shown. The under-pressure source may be a vacuum pump.

Downstream the under-pressure hopper 120 a stack height controller 140 is located. The stack height controller 140 is configured to controllably allow can ends 10 at a bottom of the stack of can ends 11 to leave the stack of can ends 11 and to thereby control the level of the upper most can end 10' of the stack of can ends 11. The stack of can ends 11 are transported from the under-pressure hopper 120 to the stack height controller 140 by a tube 125. The tube 125 guides the stack of can ends 11 from the under-pressure hopper 120 to the stack height controller 140. The stack of can ends 11 is moved within the tube 125 due to gravitational forces. As shown in Fig. 1, the tube is positioned in such a way that gravity naturally causes the can ends 10 to move downward through it, without the need for additional mechanical assistance.

The stack height controller 140, as shown in Fig. 1, is a pusher which is configured to controllably allow can ends 10 to leave the stack of can ends 11 and to push the leaving can ends 10 further into the production line. It is to be understood that downstream the stack height controller 140, the can ends 10 may continue to be arranged in a stack, e.g., a second stack. The second stack may be transported in a further tubing system, not shown, which is arranged downstream the stack height controller 140. In the further tubing system, the movement of the second stack may be reliant on the mechanical assistance of the pusher.

It is to be understood that the conveyor 110 and under-pressure hopper 120 can be positioned at any location along the can end production line 1 where transition from a transportation in a row to a stack is required. Such transition may be necessary at multiple locations throughout the production process.

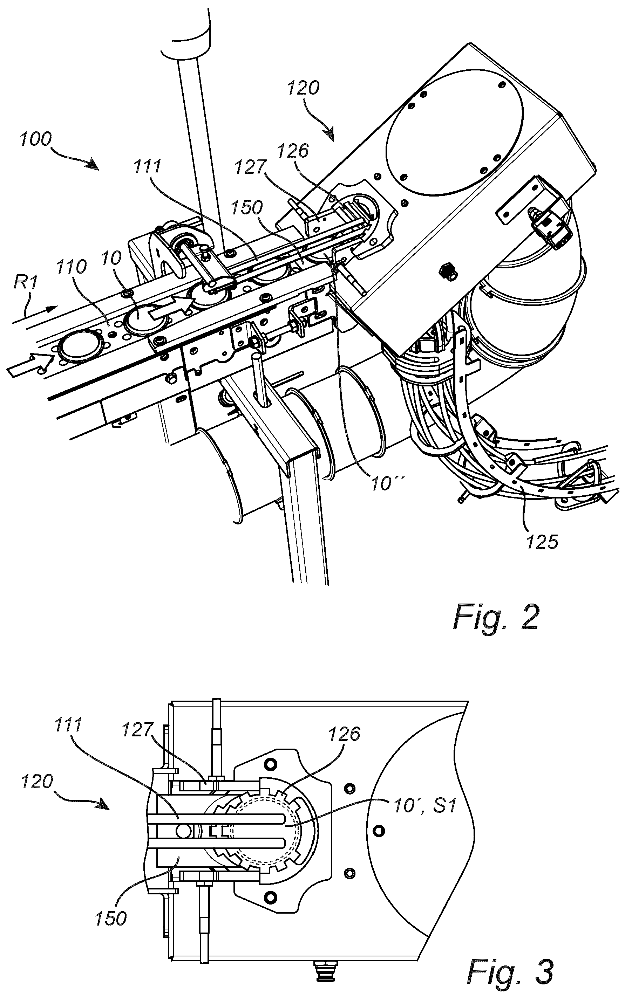

With reference to Fig. 2, a more detailed view of the can end stacker 100 is shown. The can ends 10 are transported by the conveyor 110 in a row of mutually separated can ends 10 along the first direction R1. When the can ends 10 leave the conveyor 110 they are received by the under-pressure hopper 120 positioned downstream the conveyor 110 as seen along the first direction R1. The under-pressure hopper 120 draws the can ends leaving the conveyor 10" downwardly one after the other to form a downwardly extending stack of can ends 11, as shown in Figs. 4A-D. The stack of can ends 11 is further guided along the tube 125 towards the stack height controller 140, not shown in Fig. 2.

A safety rail 111 is positioned above the conveyor to prevent can ends from bouncing off the conveyor 110.

The can end stacker includes side walls 127 aligned along the first direction R1 to prevent can ends from exiting the conveyor 110 laterally.

A transfer guide surface 150 is arranged at an end of the conveyor 110 and is configured to guide the can end 10" leaving the conveyor 110 towards the under-pressure hopper along the first direction R1. The transfer guide 150 will be described in further detail in reference to Figs. 4A.

As shown in Figs. 2-3, the under-pressure hopper 120 comprises a circularly shaped receiving portion, i.e., a circularly shaped opening, configured to receive the can ends 10" leaving the conveyor 110. The receiving portion of the under-pressure hopper has an inside surface having several circumferentially distributed grooves 126 where the under-pressure is provided through. The respective groove 126 extends along the stack direction R2. Under-pressure is provided in the under-pressure hopper 120 by an under-pressure source, e.g., a vacuum pump. The grooves 126 of the under-pressure hopper 120 are in fluid communication with the under-pressure source so that under-pressure can act on a can end 10" leaving the conveyor 110 and force the can 10" end to be drawn downwardly into the under-pressure hopper 120.

With reference to Figs. 4A-D, the sequence is shown in which a can end 10 is transported along the conveyor 110, then leaves the conveyor 110, and subsequently becomes part of a stack of can ends 11.

In Fig. 4A, can ends 10 are arranged in a row one after the other and are being transported by the conveyor 110 along the first direction R1. A stack of can ends 11 is formed in the under-pressure hopper 120 and defines a geometrical upwardly extending stack direction R2. The can ends 10 in the stack of can ends 11 are stacked on top of each other and have their respective first major surface S1 facing a respective second major surface S2 of another can end. The first major surface S1 is an upper major surface and the second major surface S2 is a bottom surface. The can end 10" leaving the conveyor 110 will become the uppermost can end 10' upon joining the stack 11, until the next can end 10" leaves the conveyor 110 and takes its place as the new uppermost can end 10'.

A sensor 130 is arranged in the under-pressure hopper 120 at a top of the stack of can ends 11. The sensor 130 is configured to determine a level L of an upper most can end 10' in the stack of can ends 11 by determining the level L of the upper most can end 10' relative to a reference point of the sensor 130. The reference point is a central axis A1 of the field of view of the sensor 130, such that the optimal level of the upper most can end 10', i.e., an optimal stack height, is in the middle of the field of view of the sensor 130.

The sensor 130 is set to have an allowable range in where the level L of the upper most can end 10' is to be present. The allowable range extends between and upper-level limit L1 and a lower-level limit L2. The allowable range may be 1-6, preferably 2-5, more preferably 2-3, can ends below and above the central axis A1 of the sensor 130. The allowable range of the sensor 130 ensures that the can end 10" leaving the conveyor 110 hits an upper major surface S1 of the upper most can end 10' in the stack of can ends 11, as shown in Fig. 4B.

The sensor 130 informs the stack height controller 140, not shown in Fig. 4A, of the level L of the upper most can end 10' by sending a signal. The stack height controller 140, based on this signal, allows can ends 10 at the bottom of the stack of can ends 11 to either leave the stack of can ends 11 or stop can ends 10 at the bottom of the stack of can ends 11 from leaving the stack of can ends 11 such that the level L' of the upper most can end is adjusted such that it is kept within the allowable range, and preferably at the same level as the central axis A1 of the sensor 130.

It is to be understood that there are many levels along the stack direction R2 and some of them are levels within the allowable range.

The level L of the upper most can end which is determined by the sensor may be referred to as a first level L. The level L' of the upper most can end 10' which is controlled by the stack height controller 140, based on the level L of the upper most can end 10' determined by the sensor 130, may be referred to as a second level L'. The first and second level L, L' may be the same if the determined level L, i.e., the first level, of the upper most can end 10' is within the allowable range.

It is to be understood that if the sensor 130 detects or determines that the first level L of the upper most can end 10' is above the central axis A1 of the sensor 130, the stack height controller 140 may allow one or more can ends 10 to leave the stack of can ends 11 at a bottom of the stack of can ends 11 such that the second level L' of the upper most can end 10' is brought to coincide with the level of the central axis A1 or to be within the allowable range of the sensor 130. Consequently, if the sensor 130 detects or determines that the first level L of the upper most can end 10' is below the central axis A1 of the sensor 130, the stack height controller 140 may stop the can ends of the stack of can ends 11 to leave the stack of can ends 11 until the second level L' of the upper most can end 10' coincides with the level of the central axis A1 or is within the allowable range of the sensor 130.

It is to be noted that if the level of the upper most can end 10' is too low relative the conveyor 110, the upper most can end 10' may not sufficiently intersect the path P1 of the can end 10" leaving the conveyor 110. This may result in that the can end 10" leaving the conveyor 110 does not hit the upper major surface S1 of the upper most can end 10' and instead hit a rear wall 141 of the under-pressure hopper 120.

If the level of the upper most can end 10' is too high relative the conveyor 110, there is a risk that the can end 10" leaving the conveyor 110 instead hit the stack of can ends 11 and disruptions will be caused.

The can end stacker 100 as shown in Figs. 1-4D, comprises a transfer guide surface 150, which extends along the first direction R1 and which bridges a second distance D2 between the conveyor 110 and the under-pressure hopper 120. The transfer guide surface 150 includes a planar surface portion 151 receiving the can end 10" leaving the conveyor 110, and a downwardly curved surface 152 where the transfer guide surface 150 transitions into forming part of an inside surface of the under-pressure hopper 120.

The transfer guide surface 150 is configured to guide the can end 10" leaving the conveyor 110 towards the upper most can end 10' along the first direction R1 and simultaneously decrease the speed of the can end 10" leaving the conveyor 110 prior to that the can end 10 hits the upper most can end 10'.

The transfer guide surface 150 is arranged on the same height as the conveyor 110 thereby providing a smooth transition between the conveyor 110 and the transfer guide surface 150.

The under-pressure hopper 120 is located at a first distance D1 from a downstream end of the conveyor 110. The first distance D1 is measured as the shortest distance along the first direction R1 from the downstream end of the conveyor 110 to a centre axis A2 of the under-pressure hopper 120, where centre refers to a centre of the can ends in the stack 11 of can ends in the under-pressure hopper 120. Thus, the distance D1 is related to the diameter of the can ends 10 and may in the order of at least 30 mm, preferably between 30 mm and 100 mm, more preferably between 30 mm and 80 mm.

The transfer guide surface 150 extends along the first direction R1 and bridges a second distance D2 between the conveyor 110 and the under-pressure hopper 120. The second distance D2 is measured as the shortest distance along the first direction R1 from the downstream end of the conveyor 110 to a downstream end of the transfer guide surface 150. Thus, the second distance D2 is a measure of the distance being independent of the diameter of the can ends 10. The second distance may between 20 mm and 80 mm, preferably between 20 mm and 50 mm.

In Fig. 4B, the can end 10" has left the conveyor 110 and is guided by the transfer guide surface 150 towards the under-pressure hopper 120 and the stack of can ends 11.

The stack of can ends 11 defines the geometrical upwardly extending stack direction R2. The stack direction R2 forms an angle α1 with the first direction R1, the angle α1 being between 45-85°. The controlled level L', i.e., the second level, of the upper most can end 10' in the stack of can ends 11 and the angle α1 of the stack direction R1 ensures that the upper most can end 10' intersects a path P1 of a can end 10" leaving the conveyor 110 such that the can end 10" leaving the conveyor 110 hits an upper major surface S1 of the upper most can end 10'. When the can end 10" leaving the conveyor 110 hit the upper major surface S1 of the upper most can end 10' the stack of can ends 11 damps the impact of the incoming can end 10" leaving the conveyor 110 and thereby efficiently reduces the speed of the can end 10" so that the under-pressure hopper 120 is able to draw the can end 10" downwardly such that is forms part of the stack of can ends 11. As seen in Fig. 4B, it is a bottom edge 10a of the can end 10 which hits the upper major surface S1 of the upper most can end 10'.

The damping effect is achieved by the stack of can ends 11, as it is at least to some extent capable of being compressed due to the inherent design of each can end 10.

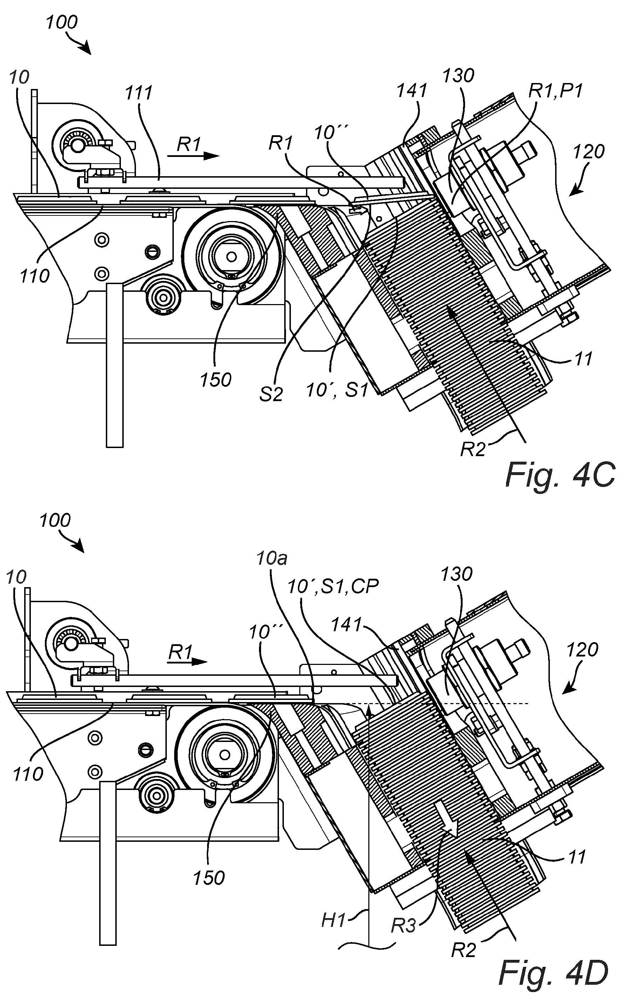

After the can end 10" leaving the conveyor 110 has hit the upper major surface S1, the bottom edge 10a of the can end 10" slides along the upper major surface S1 of the upper most can end 10' towards a rear wall 141 of the under-pressure hopper 120, as seen in Fig. 4C. The can end 10" is preferably simultaneously drawn downwardly into the under-pressure hopper 120 to form part of the downwardly extending stack of can ends 11. The rear wall 141 is positioned on a side of the under-pressure hopper 140 being opposite the conveyor 110, wherein the rear wall 141 is configured to prevent the can end 10" leaving the conveyor 110 to travel past the under-pressure hopper 140.

The can end 10" leaving the conveyor 110 will become the uppermost can end 10' upon joining the stack 11, until the next can end 10" leaves the conveyor 110 and takes its place as the new uppermost can end 10', as shown in Fig. 4D. As the new upper most can end 10' takes its place in the stack of can ends 11, the stack height controller 140 allows a can end at a bottom of the stack of can ends 11 to leave the stack of can ends 11 and thereby control the level L' of the new upper most can end 10". The new upper most can end 10", and thus also the stack of can ends 11, travels downwardly in a third direction R3 such that the level L' of the new upper most can end 10" is kept within the allowable range of the sensor 130 and intersects a path P1 of the next can end 10" leaving the conveyor 110. The third direction R3 refers to the physical extension of the stack 11 and is opposite to the geometrical upwardly extending stack direction R2.

In Fig. 4D, the bottom edge 10a of the can end 10" leaving the conveyor 110 is located at a height H1. The sensor 130 is configured to determine the level of an upper most can end 10' and inform the stack height controller 140 of the determined level L. The stack height controller 140 is configured to control the level L of the upper most can end 10' such that a central portion CP of the upper major surface S1 of the upper most can end 10' in the stack of can ends 11 is arranged to be at the same height H1 as a bottom edge 10a of the can end 10" leaving the conveyor 110. This relation provides that the bottom edge 10a of the can end 10" leaving the conveyor 110 hits the central portion CP of the upper major surface S1. If the central portion CP of the upper most can end 10' is arranged at the same height H1 as the bottom edge 10a, a sufficient impact zone is provided which ensures the damping effect of the stack of can ends 11.

In such set-up, the allowable range of the sensor 130 is set such that the level of the central portion CP of the upper major surface S1 of the upper most can end 10' in the stack of can ends 11 is arranged at the same height H1 as a bottom edge 10a of the can end 10" leaving the conveyor 110.

Even though it is preferred that the can end stacker is designed in accordance with the disclosure in the detailed disclosure of preferred embodiments and the appended drawings, it should be noted that a specific preferred embodiment of a specific component does not necessarily have to be combined with a specific embodiment of another component. Thus, advantages associated with a specific embodiment, including one or more features, of a specific component may be accomplished even though the other components is/are designed in accordance with the more general disclosure under the summary of the invention rather than being defined in accordance with the specific embodiment disclosed in the detailed description.

It is contemplated that there are numerous modifications of the embodiments described herein, which are still within the scope of the invention as defined by the appended claims.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A can end stacker (100) comprising:
a conveyor (110) extending along a first direction (R1) and being configured to transport can ends (10) along the first direction (R1), the can ends (10) being arranged in a row along the first direction (R1),
an under-pressure hopper (120) positioned downstream the conveyor (110) as seen along the first direction (R1) and configured to draw can ends (10) downwardly one after the other to form a downwardly extending stack of can ends (11), the stack of can ends (11) defining a geometrical upwardly extending stack direction (R2),
a sensor (130) configured to determine a level (L) of an upper most can end (10') in the stack of can ends (11) as seen along the stack direction (R2),
a stack height controller (140) configured to, based on the level (L) of the upper most can end (10') determined by the sensor (130), controllably allow can ends (10) at a bottom of the stack of can ends (11) to leave the stack of can ends (11) and to control the level (L) of the upper most can end (10'),
wherein the stack direction (R2) forms an angle (α1) with the first direction (R1), the angle (α1) being between 45-85°, and
wherein the stack height controller (140) is configured to control the level (L) of the upper most can end (10') such that the upper most can end (10') is positioned at a level (L') where the upper most can end (10'), due to the level (L') and the angle (α1) of the stack direction (R2), intersects a path (P1) of a can end (10") leaving the conveyor (110) such that the can end (10") leaving the conveyor (110) hits an upper major surface (S1) of the upper most can end (10').

2. The can end stacker (100) according to claim 1, wherein the stack height controller (140) is configured to control the level (L) of the upper most can end (10') such that a central portion (CP) of the upper major surface (S1) of the upper most can end (10') in the stack of can ends (11) is arranged to be at the same height (H1) as a bottom edge (10a) of the can end (10") leaving the conveyor (110).

3. The can end stacker (100) according to claim 2, wherein the central portion (CP) has an extension projected along the first direction (R1) from a midpoint of the upper major surface (S1) of the upper most can end (10') to such an extent that it corresponds to 75%, preferably 50%, of the total length of the upper major surface (S1) of the upper most can end (10') in the stack of can ends (11) as projected along the first direction (R1).

4. The can end stacker (100) according to any one of the preceding claims, wherein the stack height controller (140) is positioned a distance down along the downwardly extending stack (11).

5. The can end stacker (100) according to any one of the preceding claims, wherein the under-pressure hopper (140) comprises a rear wall (141) positioned on a side of the under-pressure hopper (140) being opposite the conveyor (110), wherein the rear wall (141) is configured to prevent the can end (10") leaving the conveyor (110) to travel past the under-pressure hopper (140).

6. The can end stacker (100) according to any one of the preceding claims, wherein the under-pressure hopper (120) is located at a first distance (D1) from a downstream end of the conveyor (110), the first distance (D1) being at least 30 mm, preferably between 30 mm and 100 mm.

7. The can end stacker (100) according to any one of the preceding claims, wherein the can end stacker (100) further comprises a transfer guide surface (150), which extends along the first direction (R1) and which bridges a second distance (D2) between the conveyor (110) and the under-pressure hopper (120),
wherein the transfer guide surface (150) is configured to guide the can end (10") leaving the conveyor (110) towards the upper most can end (10') along the first direction (R1).

8. The can end stacker (100) according to claim 7, wherein the transfer guide surface (150) includes a planar surface portion (151) receiving the can end (10") leaving the conveyor (110), and preferably also includes a downwardly curved surface (152) where the transfer guide surface (150) transitions into forming part of an inside surface of the under-pressure hopper (120).

9. The can end stacker (100) according to any one of the preceding claims, wherein the can end stacker (100) further comprises an under-pressure source configured to provide under-pressure to the under-pressure hopper (120) so as to draw can ends (10) downwardly one after the other to form the downwardly extending stack of can ends (11).

10. The can end stacker (100) according to claim 9, wherein the can end stacker (100) further comprises a throttle valve arranged between the under-pressure source and the under-pressure hopper (120), wherein the throttle valve is configured to controllably adjust the under-pressure in the under-pressure hopper (120).

11. The can end stacker (100) according to claim 10, wherein the can end stacker (100) further comprises an under-pressure sensor configured to determine the under-pressure in the under-pressure hopper (120).

12. The can end stacker (100) according to claim 11, wherein the can end stacker (100) further comprises an under-pressure controller configured to, in response to the determined under-pressure by the under-pressure sensor, automatically control a state of the throttle valve so as adjust the provided under-pressure in the under-pressure hopper (120).

13. The can end stack (100) according to any one of the preceding claims, wherein the stack height controller is configured to allow a can end (10) at a bottom of the stack of can ends (11) to leave the stack of can ends and thereby control the level (L) of the upper most can end (10') such that the upper most can end (10') is travelling downwardly at a moment in time when the can end (10") leaving the conveyor (110) hits the upper most can end (10').

14. A method for stacking can ends, the method comprising:
conveying can ends (10) along a first direction (R1), the can ends (10) being arranged in a row along the first direction (R1),
drawing can ends (10) downwardly one after the other into an under-pressure hopper (120) by providing under-pressure and stacking the can ends (10) to form a downwardly extending stack of can ends (11), the stack of can ends (11) defining a geometrical upwardly extending stack direction (R2),
determining a level (L) of an upper most can end (10') in the stack of can ends (11) as seen along the stack direction (R2),
controlling the level (L) of the upper most can end (10'), based on the determined level (L) of the upper most can end (10'), such that the upper most can end (10') is positioned at a level (L') where the upper most can end (10'), due to the level (L') and an angle (α1) of the stack direction (R2), intersects a path (P1) of a can end (10) being conveyed in the first direction (R1) such that a can end (10) hits an upper major surface (S1) of the upper most can end (10') and thereafter becomes the upper most can end (10') in the stack of can ends (11), and
allowing, based on the determined level (L) of the upper most can end (10'), can ends (10) to leave the stack of can ends (11) from a bottom of the stack of can ends (11') to thereby control the level (L) of the upper most can end (10').

15. The method for stacking can ends according to claim 14, wherein the method further comprises:
determining the under-pressure acting on the can ends (10),
adjusting the under-pressure automatically in response to the determined under-pressure, preferably towards a predetermined under-pressure target value.
